# EUROPEAN PATENT APPLICATION

(11) **EP 4 708 671 A1**
(43) Date of publication of application: **11.03.2026**
(21) Application number: 23946406.8
(22) Date of filing: 30.10.2023
(51) Int. Cl.: H02S 40/10, H02S 30/10

(54) **SELF-CLEANING PHOTOVOLTAIC ASSEMBLY**

(30) Priority: 21.07.2023 CN 202321926456 U
(71) Applicant: Shanghai Ja Solar Technology Co., Ltd., Shanghai 201401 (CN); Ja Solar Technology Yangzhou Co., Ltd., Yangzhou, Jiangsu 225131 (CN)
(72) Inventor: CHEN, Daoyuan, Yangzhou, Jiangsu 225131 (CN); WANG, Ying, Yangzhou, Jiangsu 225131 (CN); ZHOU, Yanfang, Yangzhou, Jiangsu 225131 (CN)
(74) Representative: Sun, Yiming
(86) International application number: PCT/CN2023/127497
(87) International publication number: WO 2025/020327

(57) **Abstract**

The present disclosure relates to the field of photovoltaic power generation. Specifically disclosed is a self-cleaning photovoltaic assembly comprising a mounting frame and a photovoltaic module, the mounting frame being provided with an mounting groove, and a peripheral edge of the photovoltaic module being embedded into the mounting groove; the mounting frame is provided with at least one diversion groove extending through the mounting frame along a thickness direction, the diversion groove being located on an outer side of the photovoltaic module and enclosing with a side wall of the photovoltaic module to form a diversion hole. On the top of the mounting frame is provided an inflow trough extending horizontally from a light-receiving surface of the photovoltaic module to the diversion hole. This self-cleaning photovoltaic assembly requires only a small tilt angle to allow rainwater to wash dust accumulated on the light-receiving surface of the photovoltaic module to the inflow trough. The rainwater mixed with dust can directly flow through the inflow trough into the diversion hole for discharge, thereby achieving drainage and dust removal. This prevents dust accumulation and realizes self-cleaning of the photovoltaic assembly.

## Description

### CROSS-REFERENCE TO RELATED APPLICATIONS

This application claims the priority of the Chinese Patent Application No. 202321926456.1, filed on July 21, 2023, the disclosure of which is hereby incorporated by reference in its entirety.

### TECHNICAL FIELD

The present disclosure relates to the field of photovoltaic power generation technology, and more particularly to a self-cleaning photovoltaic assembly.

### BACKGROUND

A photovoltaic assembly comprises a photovoltaic module and a side frame, with the photovoltaic module secured within the side frame. A photovoltaic assembly can convert solar energy into electrical energy, providing power for humanity. To fully capture solar energy, a photovoltaic assembly is typically installed outdoors, and as a result, dust easily accumulates on the surface of the photovoltaic module.

Under natural conditions, rainwater can wash away the dust on the surface of the photovoltaic module. However, because the height of the side frame of the photovoltaic assembly is higher than the photovoltaic module, when the assembly's tilt angle is small, such as in a flush-mounted installation, the step created by the side frame obstructs the water flow, preventing some water and dust from flowing over the side frame and ultimately leading to dust deposition on the photovoltaic module. Long-term dust accumulation can block the cells, create hotspots, and affect the module's power generation and reliability. Furthermore, dust contains acidic or alkaline substances that can easily corrode the glass surface, causing permanent staining and damaging the light transmission of the photovoltaic module.

### SUMMARY

In view of the above, the present disclosure provides a self-cleaning photovoltaic assembly to address the problem of dust accumulation on the light-receiving surface of the photovoltaic assembly, which leads to a decrease in the power generation efficiency and reliability of the photovoltaic assembly.

In one aspect, a self-cleaning photovoltaic assembly is provided, comprising a mounting frame and a photovoltaic module, wherein the mounting frame is provided with an mounting groove, a peripheral edge of the photovoltaic module being embedded into the mounting groove; the mounting frame is provided with at least one diversion groove extending through the mounting frame along a thickness direction, the diversion groove being located on an outer side of the photovoltaic module and enclosing with a side wall of the photovoltaic module to form a diversion hole; and on the top of the mounting frame is provided an inflow trough extending horizontally from a light-receiving surface of the photovoltaic module to the diversion hole.

In one of the embodiments, the photovoltaic module is a quadrilateral module; and the mounting frame is a quadrilateral frame matching a shape of the photovoltaic module, the mounting frame comprising four interconnected side frames.

In one of the embodiments, the diversion groove is formed by a groove body provided on one of the side frames.

In one of the embodiments, the diversion groove is formed by enclosing a groove body provided on one of the side frames and a side edge of an adjacent side frame.

In one of the embodiments, the diversion groove is formed by enclosing the groove body provided on one of the side frames and a groove body provided on an adjacent side frame.

In one of the embodiments, the photovoltaic module is provided with an enlarged hole structure at a position corresponding to the diversion groove, the enlarged hole structure being opposite to and connecting with the diversion groove.

In one of the embodiments, the enlarged hole structure is a notch provided on an edge of the photovoltaic module, the notch being opposite to the diversion groove and enclosing the diversion hole.

In one of the embodiments, the diversion groove is located at a corner of the mounting frame, and the enlarged hole structure is a chamfer provided at a corner of the photovoltaic module, the chamfer being opposite to the diversion groove and enclosing the diversion hole.

In one of the embodiments, the mounting frame is provided with the diversion groove at each of its four corners, and the edge of the photovoltaic module is provided with four chamfers respectively opposite to the diversion grooves.

In one of the embodiments, the chamfer is a rounded chamfer or a straight chamfer.

The self-cleaning photovoltaic assembly achieves its effect by providing a diversion groove on the side of the photovoltaic module, enclosing a diversion hole with the side wall of the photovoltaic module, and providing an inflow trough on the top of the mounting frame that extends along the light-receiving surface of the photovoltaic module. This arrangement allows rainwater when flowing, mixed with dust on the light-receiving surface, to flow directly into the inflow trough, then into the diversion holes at the edge of the photovoltaic module, and finally be discharged through the diversion holes, achieving drainage and dust removal. This process eliminates the need for rainwater to flow over the step formed between the mounting frame and the surface of the photovoltaic module, ensuring that even larger dust particles are carried away by the rainwater, thereby achieving the purpose of self-cleaning for the photovoltaic assembly.

### BRIEF DESCRIPTION OF THE DRAWINGS

FIG. 1 is a top view of a self-cleaning photovoltaic assembly according to one embodiment;
FIG. 2 is a partial schematic view of a mounting frame according to one embodiment;
FIG. 3 is a partial schematic view of a self-cleaning photovoltaic assembly according to one embodiment;
FIG. 4 is a schematic view showing the structure of a photovoltaic module embedded into a side frame according to one embodiment;
FIG. 5 is a schematic view showing the structure of a diversion groove in the middle of a side frame enclosing a diversion hole with a photovoltaic module according to one embodiment;
FIG. 6 is a schematic view showing the structure of a diversion hole provided at a corner of a mounting frame according to one embodiment;
FIG. 7 is a schematic view showing the structure of a diversion hole provided at a corner of a mounting frame according to another embodiment;
FIG. 8 is a schematic view showing the structure of a notch provided on a side edge of a photovoltaic module according to one embodiment;
FIG. 9 is a schematic view showing the structure of a chamfer provided at a corner of a photovoltaic module according to one embodiment.

The reference numerals in the drawings include: mounting frame 1, side frame 101, clamping groove 1011, photovoltaic module 2, notch 201, chamfer 202, diversion hole 3, diversion groove 301, inflow trough 4.

### DETAILED DESCRIPTION

The present disclosure will be further described in detail below with reference to the accompanying drawings and embodiments. It should be understood that the specific embodiments described herein are merely illustrative of the present application and are not intended to limit the scope of the present disclosure.

It should be noted that the illustrations provided in this embodiment are merely intended to illustrate the basic concept of the present disclosure.

The structures, proportions, sizes, and the like shown in the drawings attached to the description are merely intended to accompany the content disclosed in the description for the understanding and reading of those skilled in the art, and are not intended to limit the conditions under which the present disclosure can be implemented. Any modification of the structure, change of the proportional relationship, or adjustment of the size, as long as it does not affect the efficacy and the purpose that the present disclosure can achieve, should still fall within the scope of the technical content disclosed in the present disclosure.

The terms such as "above," "below," "left," "right," "middle," "longitudinal," "transverse," "horizontal," "inner," "outer," "radial," and "peripheral" used in the description indicate orientations or positional relationships based on the orientations or positional relationships shown in the drawings, and are merely for simplifying the description, and are not intended to indicate or imply that the indicated device or component must have a specific orientation, be constructed with a specific orientation, or operate with a specific orientation. Therefore, they should not be understood as limitations on the present disclosure. In addition, the terms "first" and "second" are used only to describe the purpose and should not be understood as indicating or implying relative importance.

Existing photovoltaic assemblies, when installed at a small tilt angle, cannot completely wash away the dust on the photovoltaic module, causing dust to accumulate on the photovoltaic module, affecting the amount of sunlight incident on the module, and reducing the conversion efficiency of the photovoltaic assembly. In view of this, the embodiment of the present disclosure provides a self-cleaning photovoltaic assembly, which forms a diversion hole between the photovoltaic module and the side frame, allowing water to flow out through the diversion hole, achieving the purpose of drainage and dust removal.

Specifically, at least one embodiment of the present disclosure provides a self-cleaning photovoltaic assembly, comprising a mounting frame and a photovoltaic module, wherein the mounting frame is provided with a mounting groove, a peripheral edge of the photovoltaic module being embedded into the mounting groove;
the mounting frame is provided with at least one diversion groove extending through the thickness of the mounting frame, the diversion groove being located on the outer side of the photovoltaic module and enclosing a diversion hole with the side wall of the photovoltaic module; and on the top of the mounting frame is provided an inflow trough extending horizontally from a light-receiving surface of the photovoltaic module to the diversion hole.

The self-cleaning photovoltaic module provided by the embodiment of the present disclosure achieves its effect by providing a diversion groove on the side of the photovoltaic module, enclosing a diversion hole with the side wall of the photovoltaic module, and providing an inflow trough on the top of the mounting frame that extends along the light-receiving surface of the photovoltaic module. This arrangement allows rainwater when flowing, mixed with dust on the light-receiving surface of the photovoltaic module, to flow directly into the inflow trough, then into the diversion holes at the edge of the photovoltaic module, and finally be discharged through the diversion holes, achieving drainage and dust removal. This process eliminates the need for rainwater to flow over the step formed between the mounting frame and the surface of the photovoltaic module, ensuring that even larger dust particles are carried away by the rainwater, thereby achieving the purpose of self-cleaning for the photovoltaic assembly.

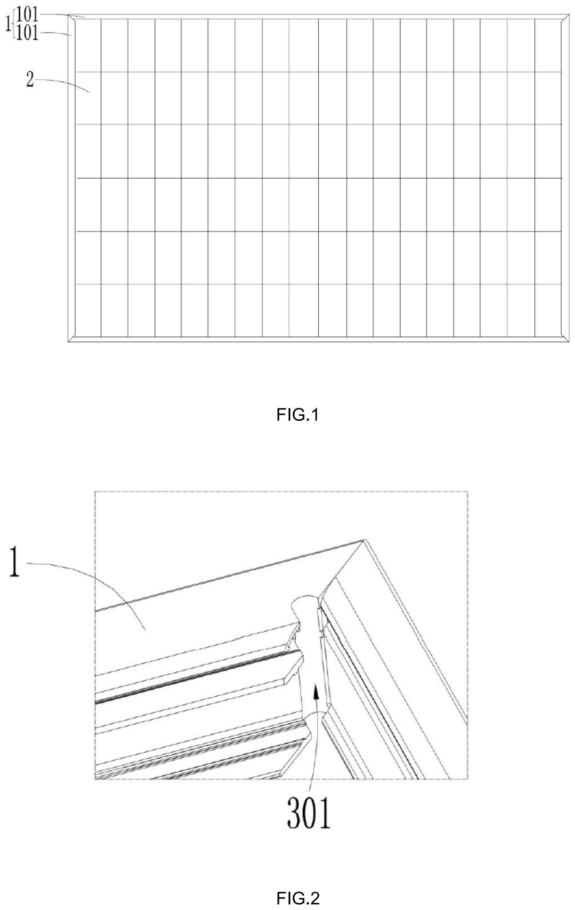

With reference to the accompanying drawings, a detailed description of the embodiment of the present disclosure and its examples will be provided below. FIG.1 is a structural schematic diagram of the self-cleaning photovoltaic module provided by at least one embodiment of the present disclosure.

As shown in FIG.1, the self-cleaning photovoltaic module provided by the embodiment of the present disclosure comprises a mounting frame 1 and a photovoltaic module 2.

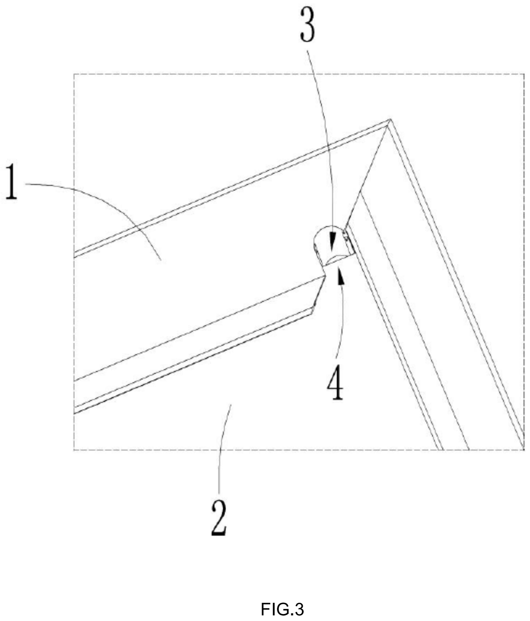

The photovoltaic module 2 is the component that realizes photoelectric conversion in the photovoltaic assembly, and its structure is known in the prior art, and will not be described in detail in this embodiment. It should be understood that the surface of the photovoltaic module 2 that receives light irradiation is the light-receiving surface, and the opposite surface is the back surface. For example, in the example shown in FIG.3, the light-receiving surface of the photovoltaic module 2 is the upper surface of the photovoltaic module 2.

The mounting frame 1 is the supporting frame for installing and fixing the photovoltaic module 2. For example, the mounting frame 1 can be a polygonal frame structure with a hollow middle portion, such as a triangular frame, a quadrilateral frame, and the like. Generally, the shape of the mounting frame 1 is consistent with the shape of the photovoltaic module 2. For example, when the photovoltaic module 2 is rectangular, the mounting frame 1 is a rectangle matching the shape and size of the photovoltaic module 2.

Specifically, referring to FIG.1, in this embodiment, the photovoltaic module 2 is a quadrilateral module, and correspondingly, the mounting frame 1 is a quadrilateral frame structure comprising four interconnected side frames 101. The four side frames 101 include two opposite long side frames and two opposite short side frames.

In this embodiment, the mounting frame 1 is provided with a mounting groove for installing the photovoltaic module 2, and the peripheral edge of the photovoltaic module 2 is embedded into the mounting groove.

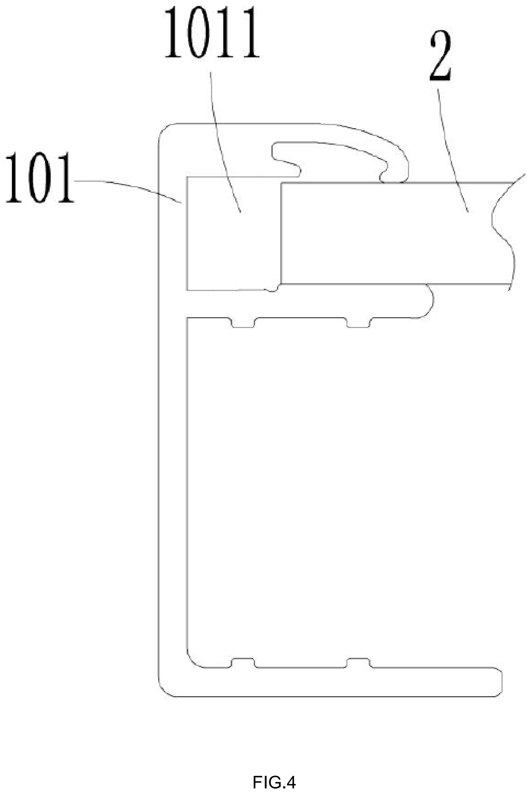

For example, referring to FIG. 2 and FIG. 4, in this embodiment, each side frame 101 is provided with a clamping groove 1011 on its inner side. When the four side frames 101 interconnected to form a quadrilateral frame, the clamping grooves 1011 of the respective side frames 101 can be combined to enclose the aforementioned mounting groove, and the four sides of the photovoltaic module 2 are just embedded into the clamping grooves 1011 of the four side frames 101, so that the mounting frame 1 can provide support for the photovoltaic module 2.

Referring to FIG. 2 and FIG. 3, in this embodiment, the mounting frame 1 is provided with at least one diversion groove 301 that extends through the mounting frame 1 along a thickness direction. The diversion groove 301 is located on the outer side of the photovoltaic module 2 and encloses with a side wall of the photovoltaic module 2 to form a diversion hole 3.

Specifically, referring to FIG. 2, the diversion groove 301 extends through the mounting frame 1 along the thickness direction, which means that the diversion groove 301 is a through-groove extending from the top to the bottom of the mounting frame 1, allowing rainwater flowing from the top of the diversion groove 301 to flow down and be discharged.

Specifically, referring to FIG. 3, the diversion groove 301 is located on the outer side of the photovoltaic module 2, which means that when the photovoltaic module 2 is embedded into the clamping groove 1011, the diversion groove 301 is aligned with the peripheral edge of the photovoltaic module 2, allowing the diversion groove 301 to enclose with a side wall of the photovoltaic module 2 to form a diversion hole 3.

Referring to FIG. 4, in some embodiments, when the photovoltaic module 2 is embedded into the clamping groove 1011, there is a certain gap between the side wall of the photovoltaic module 2 and the side wall of the clamping groove 1011. This gap can be filled with a frame sealant, such as silicone sealant, and also provides a structural basis for enclosing a diversion hole 3 between the mounting frame 1 and the side wall of the photovoltaic module 2.

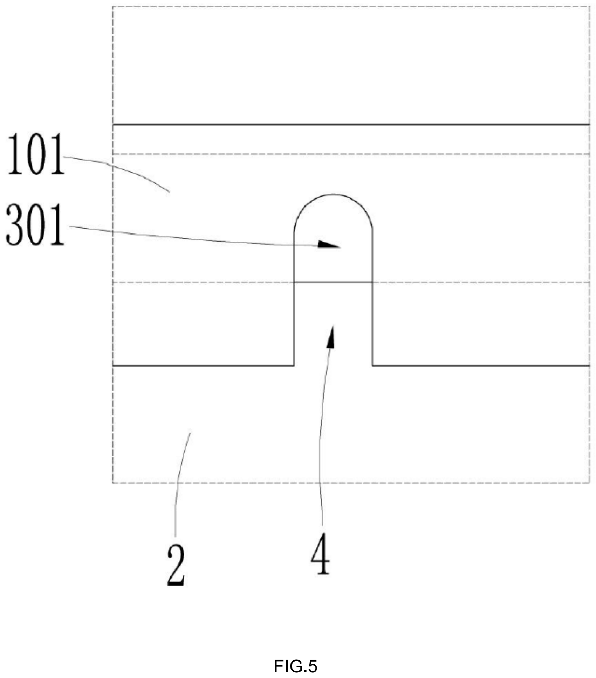

For example, referring to FIG. 5, when there is a gap between the side wall of the photovoltaic module 2 and the side wall of the clamping groove 1011, the diversion groove 301 can be provided between these two side walls. That is, the diversion groove 301 intersects with and connects to the clamping groove 1011. In this structural design, when the clamping groove 1011 is filled with a silicone sealant, the portion of the diversion groove 301 must be avoided, and the silicone sealant should be sealed on both sides of the diversion groove 301 to prevent rainwater from entering the clamping groove 1011 through the diversion groove 301. Alternatively, in other embodiments, baffles integrally molded onto the side frame 101 may be installed on both sides of the diversion groove 301. These baffles block the connection between the diversion groove 301 and the clamping groove 1011, thereby preventing rainwater from entering the clamping groove 1011 through the diversion groove 301.

Referring to FIG. 2 and FIG. 3, in another example, the diversion groove 301 can also be provided in a recessed manner on the side wall of the clamping groove 1011, so that even if the side wall of the photovoltaic module 2 is tightly against the side wall of the clamping groove 1011, the side wall of the photovoltaic module 2 can still enclose with the diversion groove 301 to form the diversion hole 3.

Specifically, in some embodiments, the diversion groove 301 can be formed by a groove body on a single side frame 101. For example, referring to FIG. 5, a groove body is provided in the middle of a side frame 101, which serves as the diversion groove 301. When the photovoltaic module 2 is embedded into the clamping groove 1011, the side wall of the photovoltaic module 2 can enclose with the side wall of the diversion groove 301 to form the diversion hole 3, and rainwater can be discharged from the diversion hole 3 in the middle of the side frame 101.

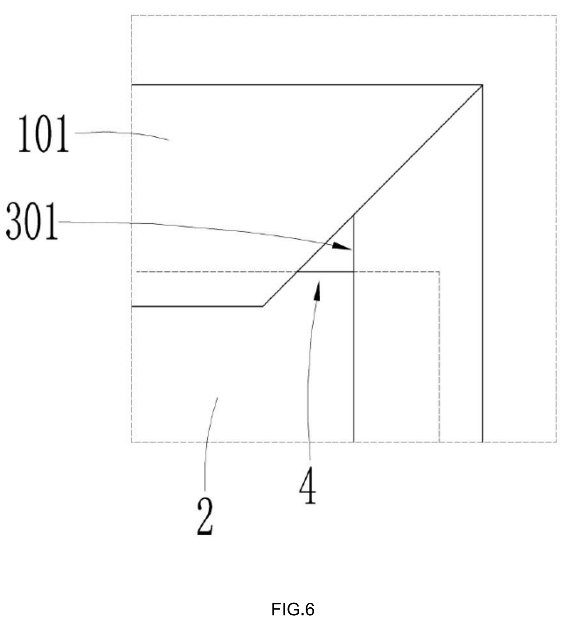

In other embodiments, the diversion groove 301 can also be formed by enclosing a groove body provided on one side frame 101 and a side edge of an adjacent side frame 101. For example, referring to FIG. 2 and FIG. 6, a groove body is provided on the side edge of one side frame 101 near another side frame 101, and the groove body is aligned with and enclosed with the side wall of the other side frame 101 to form the diversion groove 301. The diversion groove 301 is located at the corner of the mounting frame 1, and when the photovoltaic module 2 is embedded into the clamping groove 1011, the diversion groove 301 and the side wall of the photovoltaic module 2 enclose to form the diversion hole 3, and rainwater can be discharged from the diversion hole 3 at the corner of the mounting frame 1.

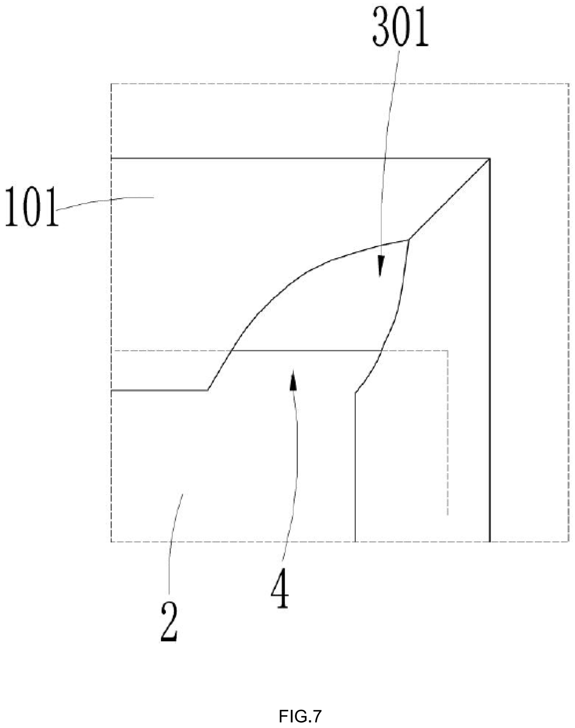

In other embodiments, the diversion groove 301 can be formed by enclosing a groove body on one side frame 101 and a groove body provided on an adjacent side frame 101. For example, referring to FIG. 7, groove bodies are provided on the side edges of one side frame 101 and another side frame 101 where they connect, and the two groove bodies are aligned and enclosed to form the diversion groove 301. The diversion groove 301 is located at the corner of the mounting frame 1, and when the photovoltaic module 2 is embedded into the clamping groove 1011, the groove bodies on the two side frames 101 and the side wall of the photovoltaic module 2 are enclosed to form the diversion hole 3, whereby rainwater can be discharged from the diversion hole 3 at the corner of the mounting frame 1.

Furthermore, in this embodiment, a plurality of diversion grooves 301 is provided. For example, when the diversion groove 301 is provided in the middle of the side frame 101, one diversion groove 301 can be provided in the middle of each of the four side frames 101; for example, when the diversion groove 301 is provided at the corner of the mounting frame 1, one diversion groove 301 can be provided at each of the four corners of the mounting frame 1. Thus, when the photovoltaic assembly is laid horizontally, rainwater can flow out from the diversion holes 3 around the photovoltaic assembly, improving drainage and dust removal efficiency; and when the photovoltaic component is laid at an angle, rainwater can be discharged from the diversion holes 3 on that side, ensuring drainage and dust removal effect.

In this embodiment, on the top of the mounting frame 1 is also provided an inflow trough 4 extending horizontally from the light-receiving surface of the photovoltaic module 2 to the diversion hole 3. For example, referring to FIG.3, a notch is provided on the top plate of the side frame 101 opposite to the diversion hole 3, and the notch extends horizontally from the light-receiving surface of the photovoltaic module 2 to the diversion hole 3 to form the inflow trough 4. Thus, rainwater on the light-receiving surface of the photovoltaic module 2 can directly flow along the light-receiving surface into the inflow trough 4, then flow along the inflow trough 4 into the diversion hole 3 and be discharged. In this process, rainwater does not need to flow over the step formed between the top of the mounting frame 1 and the surface of the photovoltaic module 2, so even larger dust particles can be carried away by the rainwater, achieving the self-cleaning purpose of the photovoltaic assembly.

Furthermore, in this embodiment, an enlarged hole structure is provided on a side edge of the photovoltaic module 2 corresponding to the diversion groove 301, the enlarged hole structure being opposite to and connected to the diversion groove 301, so as to increase the cross-sectional area of the diversion hole 3 and improve the drainage and dust removal effect.

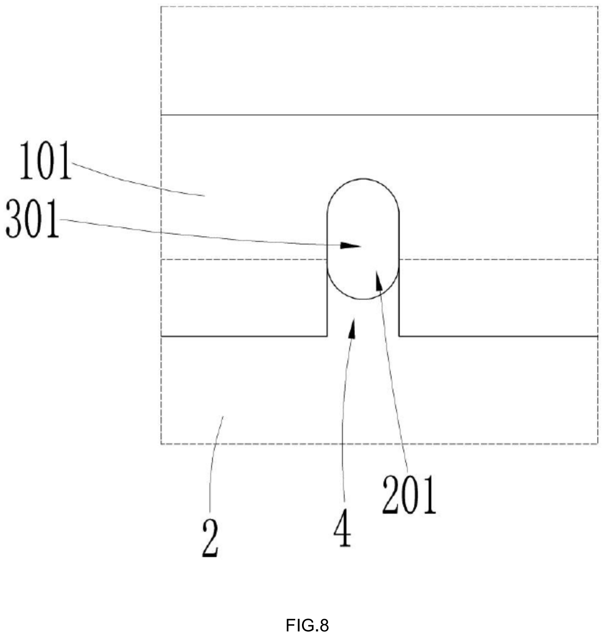

For example, referring to FIG. 8, in one example, the enlarged hole structure includes a notch 201 on the edge of the photovoltaic module 2, and the notch 201 being opposite to the diversion groove 301 and enclosing the diversion hole 3. The notch 201 is formed by cutting a portion of the photovoltaic module 2 on a side edge opposite to the diversion groove 301, and the purpose of the cutting is to remove material and trim the structure. When the notch 201 is opposite to the diversion groove 301, a larger diversion hole 3 can be formed. Thus, this photovoltaic assembly can form a larger diversion hole 3 in a limited size, improving drainage and dust removal effect.

Specifically, referring to FIG. 8, when the diversion groove 301 is provided in the middle of the side frame 101, the notch 201 can be formed by cutting the middle of the side wall of the photovoltaic module 2. Similarly, when the diversion groove 301 is provided at the corner of the mounting frame 1, the notch 201 can be formed by cutting the corner of the photovoltaic module 2.

In addition, when the diversion groove 301 is provided at the corner of the mounting frame 1, the enlarged hole structure can also be a chamfer 202 on the corner of the photovoltaic module 2, the chamfer 202 being opposite to the diversion groove 301 and enclosing the diversion hole 3.

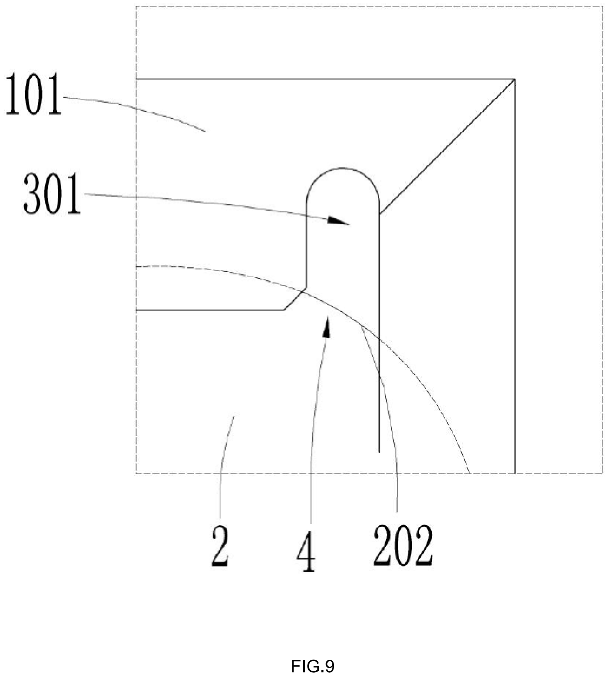

For example, referring to FIG. 9, when the diversion groove 301 is provided at the corner of the mounting frame 1, a rounded corner or a right angle can be formed at the corner of the photovoltaic module 2 to enclose with the diversion groove 301 to form the diversion hole 3, so as to increase the cross-sectional area of the diversion hole 3. Furthermore, corresponding to the structure in which the diversion groove 301 is provided at each of the four corners of the mounting frame 1, chamfers are also provided at each of the four corners of the photovoltaic module 2 to enclose with the diversion groove 301 to form the diversion hole 3.

It should be understood that usually there is a blank area around the photovoltaic module 2 where no cells are placed. Therefore, the enlarged hole structure in the above embodiments is all located in the blank area around the photovoltaic module 2, so that the enlarged hole structure does not interfere with the cells of the photovoltaic module 2 and does not affect the power generation efficiency of the photovoltaic module 2.

The self-cleaning photovoltaic assembly provided in the above embodiments only requires a small tilt angle during installation, and rainwater can wash away the dust accumulated on the light-receiving surface of the photovoltaic module 2 to the inflow trough 4. The rainwater mixed with dust can directly flow through the inflow trough 4 into the diversion hole 3 for discharge, so as to achieve the purpose of drainage and dust removal, avoid dust accumulation, and realize the self-cleaning of the photovoltaic component.

The various technical features of the above embodiments can be combined arbitrarily. In order to make the description concise, not all possible combinations of the technical features in the above embodiments are described. However, as long as there is no contradiction between the combinations of these technical features, they should all be considered within the scope recorded in this specification.

The above embodiments only express several implementation modes of the present invention, and the description is relatively specific and detailed, but it cannot be understood as a limitation of the scope of the patent. It should be pointed out that those skilled in the art can make several modifications and improvements without departing from the concept of the present invention, and these all fall within the scope of protection of the present invention. Therefore, the scope of protection of the patent should be based on the attached claims.

## Claims

1. A self-cleaning photovoltaic assembly, comprising a mounting frame (1) and a photovoltaic module (2), wherein the mounting frame (1) is provided with an mounting groove, a peripheral edge of the photovoltaic module (2) being embedded into the mounting groove;
the mounting frame (1) is provided with at least one diversion groove (301) extending through the mounting frame (1) along a thickness direction, the diversion groove (301) being located on an outer side of the photovoltaic module (2) and enclosing with a side wall of the photovoltaic module (2) to form a diversion hole (3); and on the top of the mounting frame (1) is provided an inflow trough (4) extending horizontally from a light-receiving surface of the photovoltaic module (2) to the diversion hole (3).

2. The self-cleaning photovoltaic assembly according to claim 1, wherein the photovoltaic module (2) is a quadrilateral module; and
the mounting frame (1) is a quadrilateral frame matching a shape of the photovoltaic module (2), the mounting frame (1) comprising four interconnected side frames (101).

3. The self-cleaning photovoltaic assembly according to claim 2, wherein the diversion groove (301) is formed by a groove body provided on one of the side frames (101).

4. The self-cleaning photovoltaic module according to claim 2, wherein the diversion groove (301) is formed by enclosing a groove body provided on one of the side frames (101) and a side edge of an adjacent side frame (101).

5. The self-cleaning photovoltaic module according to claim 2, wherein the diversion groove (301) is formed by enclosing the groove body provided on one of the side frames (101) and a groove body provided on an adjacent side frame (101).

6. The self-cleaning photovoltaic module according to claim 2, wherein the photovoltaic module (2) is provided with an enlarged hole structure at a position corresponding to the diversion groove (301), the enlarged hole structure being opposite to and connecting with the diversion groove (301).

7. The self-cleaning photovoltaic module according to claim 6, wherein the enlarged hole structure is a notch (201) provided on an edge of the photovoltaic module (2), the notch (201) being opposite to the diversion groove (301) and enclosing the diversion hole (3).

8. The self-cleaning photovoltaic module according to claim 6, wherein the diversion groove (301) is located at a corner of the mounting frame (1), and the enlarged hole structure is a chamfer (202) provided at a corner of the photovoltaic module (2), the chamfer (202) being opposite to the diversion groove (301) and enclosing the diversion hole (3).

9. The self-cleaning photovoltaic module according to claim 6, wherein the mounting frame (1) is provided with the diversion groove (301) at each of its four corners, and the edge of the photovoltaic module (2) is provided with four chamfers (202) respectively opposite to the diversion grooves (301).

10. The self-cleaning photovoltaic module according to claims 8 or 9, wherein the chamfer (202) is a rounded chamfer or a straight chamfer.
